# EUROPÄISCHE PATENTANMELDUNG

(11) **EP 0 560 134 A1**
(43) Veröffentlichungstag der Anmeldung: **15.09.1993**
(21) Anmeldenummer: 93102930.0
(22) Anmeldetag: 25.02.1993
(51) Int. Cl.: B60K 20/04

(54) **Schalthebelanordnung für eine mechanische Betätigung eines Kraftfahrzeuggetriebes**

(30) Priorität: 12.03.1992 DE 4207810; 05.02.1993 DE 4303310
(71) Anmelder: IVECO MAGIRUS AG, D-89079 Ulm (DE)
(72) Erfinder: Rau, Kurt, W-7900 Ulm (DE); Koch, Werner, W-7345 Deggingen (DE)
(74) Vertreter: TER MEER - MÜLLER - STEINMEISTER & PARTNER

(57) **Zusammenfassung**

2.1. Bekannte mechanische Schalthebelanordnungen sehen Schalthebelpositionen vor, welche im Werk fest eingestellt werden. Individuelle Fahrereinstellung durch den Fahrer selbst ist nicht möglich. Andere bekannte Schalthebelanordnungen sehen zwar eine individuelle Verstellbarkeit durch den Fahrer vor, jedoch ist versehentliche Verstellung möglich, oder es ist die Verstellung vergleichsweise kompliziert aufgebaut und unhandlich.

2.2. Bei einer Schalthebelanordnung (1) mit einem Schalthebel (2) und einer Schalthebellagerung (3) auf einer am Fahrzeug-/Fahrerhausboden (5) zumindest längsverschieblichen Trägerplatte (4) ist die Trägerplatte durch eine Schnellklemmvorrichtung am Fahrerhausboden (5) feststellbar, welche zumindest einen Klemmexzenter (6) und einen Klemmexzenter-Betätigungshebel (7) aufweist.

## Beschreibung

Die Erfindung betrifft eine Schalthebelanordnung für eine mechanische Betätigung eines Kraftfahrzeuggetriebes gemäß Oberbegriff des Patentanspruchs 1.

Dem Fahrer eines Kraftfahrzeugs wird die Bedienung durch viele Einrichtungen erheblich erleichtert. Nicht zuletzt tragen diese zur Erhöhung der aktiven und passiven Sicherheit bei, weil der Fahrer sich nur noch auf den Straßenverkehr konzentrieren muß.

Damit alle Bedienungselemente, wie Pedale, Lenkrad, Schalter, etc., von einem Fahrer jeder Größe und Statur bequem erreicht werden können, gibt es beispielsweise in Höhen-und Längsrichtung verstellbare Sitze, in Neigung und Form verstellbare Sitzlehnen sowie in der Neigung verstellbare Lenkräder. Bei vielen Fahrern reicht diese Verstellmöglichkeit jedoch nicht aus, um auch den Getriebeschalthebel erreichen zu können, ohne sich nach vorne bewegen zu müssen oder ohne mit dem Ellbogen die Sitzlehne beim Bewegen des Schalthebels nach hinten zu berühren. Man versucht daher, den Schalthebel so zu plazieren, daß er von einem möglichst großen Teil der Fahrer bequem erreicht und geschaltet werden kann. Dies erweist sich jedoch als relativ schwierig, weil nicht nur die unterschiedlichen Körpergrößen der Fahrer berücksichtigt werden müssen, sondern auch deren unterschiedliche Bein- und vor allem Armlängen. Oftmals befindet sich bei optimaler Erreichbarkeit der Pedale und des Lenkrades der Schalthebel zu nahe oder zu weit weg vom Fahrer.

Aus EP 0 358 894 A2 ist eine mechanische Schalthebelanordnung der eingangs genannten Art bekannt, bei der eine Verstellung der Schalthebellagerung über ein Viergelenk möglich ist, um den Betätigungsgriff des Schalthebels für eine Bedienungsperson individuell zu positionieren. Die Verstellung kann jedoch nicht vom Fahrer, sondern vom Werk nur mit erhöhtem Verstellaufwand vorgenommen werden.

Individuelle Verstellbarkeit des Schalthebels bei einer mechanischen Schalthebelanordnung ist beispielsweise gemäß DE 36 13 480 C2 möglich. Der Schalthebel ist hierbei zwei-geteilt. Der obere Schalthebelteil kann hierbei gegen die Kraft einer Feder gegen den unteren gelagerten Schalthebelteil niedergedrückt und aus einer Rast gelöst sowie in einer verschwenkten Lage wieder freigegeben werden, in der der obere Schalthebelteil bezüglich des unteren Schalthebelteils nicht mehr in der Längsachse ausgerichtet ist, d.h. der Schaltgriff in seiner Position bezüglich der Schalthebellagerung verändert werden kann. Von Nachteil ist, daß der Fahrer versehentlich bei einem Schaltvorgang den oberen Schalthebelteil verstellen kann, beispielsweise beim Einlegen eines Rückwärtsgangs.

Weitere bekannte Verstellmöglichkeiten von Schalthebel, beispielsweise gemäß DE 37 08 305 C2 und DE 37 08 322 C2, haben entweder den Nachteil der vorgenannten versehentlichen Verstellbarkeit durch den Fahrer oder sind vergleichsweise kompliziert und unhandlich.

Aufgabe der Erfindung ist die Schaffung einer Schalthebelanordnung für eine mechanische Betätigung eines Kraftfahrzeuggetriebes der eingangs genannten Art, welche bei einfachem Aufbau handlich und zuverlässig durch den Fahrer schnell verstellt werden kann.

Gelöst wird die der Erfindung zugrundeliegende Aufgabe durch die im kennzeichnenden Teil des Anspruchs 1 angegebenen Merkmale.

Vorteilhaft weitergebildet wird der Erfindungsgegenstand durch die Merkmale der Unteransprüche 2 bis 8 .

Wesen der Erfindung ist die Feststellbarkeit der Trägerplatte bezüglich des Fahrzeug-/Fahrerhausbodens durch eine vom Fahrer betätigbare Schnellklemmvorrichtung, welche zumindest einen Klemmexzenter und einen Klemmexzenter-Betätigungshebel aufweist.

Um mehrere Klemmstellen an einer Trägerplatte einrichten zu können, können mehrere Klemmexzenter bei einer Schnellklemmvorrichtung vorgesehen sein, die dann ihrerseits mit einem Zwischengestänge verbunden sind.

Die Schalthebellagerung umfaßt vorzugsweise ein Gelenklager, und es ist der Schalthebel vergleichsweise einfach in einteiliger Form aufgebaut, wobei der Schalthebel unterseitig an einem Ende einer Schaltstange des Kraftfahrzeuggetriebes angelenkt ist.

Der Betätigungshebel für den oder die Klemmexzenter kann seinerseits durch einen fahrzeugfesten Schwenkbügel in der Klemm-Schließstellung gesichert werden, in der der Betätigungshebel vorzugsweise parallel zum Fahrerhausboden angeordnet ist, während der Betätigungshebel in der Nichtklemm-Stellung im wesentlichen vertikal gut erreichbar für den Fahrer verläuft.

Führungsschienen, Halteklammern, etc. zum Verschieben der Trägerplatte in Längs- und/oder Querrichtung können vorgesehen sein.

Insbesondere ist auch stufenlose Verschieblichkeit möglich.

Zwar ist aus JP-A-62 8210 eine Schalthebelanordnung der eingangs genannten Art bekannt, die Feststellvorrichtung der verschieblichen Trägerplatte ist jedoch eine Schraubklemmvorrichtung, welche nur schwer zu handhaben ist. Es bleibt dem Fahrer überlassen, wie stark oder lose er die Schraubklemmvorrichtung anzieht. Entsprechend ist die Schließstellung der Trägerplatte nicht einwandfrei definiert. Zu starkes Anziehen der Schraubklemmvorrichtung kann diese beschädigen. Wird andererseits die Schraubklemmvorrichtung zu wenig angezogen, kann sich die Trägerplatte lösen.

Demgegenüber ist durch die Erfindung mit Hilfe einfacher Mittel eine individuelle Schalthebelposition durch den Fahrer auf höchst einfache Weise einstellbar, wobei Fehlverstellung nicht möglich ist.

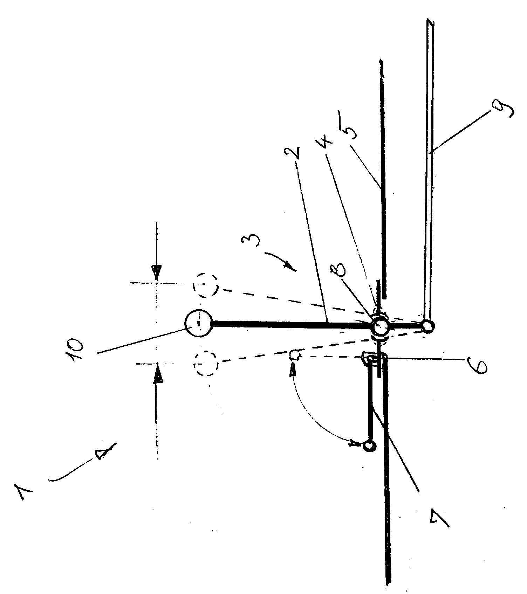

Die Erfindung wird nachfolgend anhand eines Ausführungsbeispiels unter Bezugnahme auf die beigefügte Zeichnung näher beschrieben, deren einzige Figur in einem schematischen Vertikalschnitt eine Schalthebelanordnung für eine mechanische Betätigung eines Kraftfahrzeuggetriebes zeigt.

Die Schalthebelanordnung (1) umfaßt einen einteiligen Schalthebel (2) mit oberem Schaltgriff (10), welcher unterseitig mit einer Schaltstange (9) eines hier nicht weiter interessierenden Kraftfahrzeuggetriebes gelenkig verbunden ist. Die Schaltstange (9) liegt hierbei abgedeckt unter dem Fahrerhausboden (5) des Kraftfahrzeuges.

Der Schalthebel (2) umfaßt eine Schalthebellagerung (3) mit einem Gelenklager(8), wobei die Schalthebellagerung (3) auf einer im wesentlichen horizontal verlaufenden Trägerplatte (4) fest angeordnet ist. Die Trägerplatte (4) befindet sich in dichter Nachbarschaft zum Fahrerhausboden (5) in einer relativ zum Fahrerhausboden (5) verschieblichen Lage.

Im veranschaulichten Ausführungsbeispiel ist die Trägerplatte in nichtveranschaulichten seitlichen Führungsschienen längsverschieblich bezüglich der Fahrzeuglängserstreckung relativ zum Fahrerhausboden (5) geführt, und es kann die Trägerplatte (4) durch eine Schnellarretierungseinrichtung in Form einer Schnellklemmvorrichtung bezüglich des Fahrerhausbodens (5) festgestellt werden.

Im besonderen sieht die Schnellklemmvorrichtung Klemmexzenter (6) vor, von denen einer in der Zeichnung schematisch veranschaulicht ist. Der Klemmexzenter (6) ist an einem Ende eines Betätigungshebels (7) rechtwinklig befestigt, wobei der Betätigungshebel aus einer im wesentlichen vertikalen gestrichelten Lage, in welcher der Klemmexzenter (6) die Trägerplatte (4) nicht gegen den Fahrerhausboden (5) klemmt, in eine im wesentlichen horizontale Klemm-Schließstellung parallel zum Fahrerhausboden manuell vom Fahrer bewegt werden kann, in welcher der Klemmexzenter (6) die Trägerplatte (4) fest gegen den Fahrerhausboden verklemmt. In der Klemm-Schließstellung des Betätigungshebels (7) kann ein fahrzeugfester Schwenkbügel zur Sicherung des Betätigungshebels (7) vorgesehen sein.

Ersichtlich kann bei gelöster Schnellarretierungseinrichtung die Trägerplatte (4) in Fahrzeuglängsrichtung relativ zum Fahrerhausboden (5) vom Fahrer verschoben werden. Der Fahrer hält hierbei den Schaltgriff (10) in seiner Hand und stellt sich seine individuelle Nullstellung des Schalthebels (2) ein. Der Schalthebel (2) kann zwischen den beiden gestrichelten Stellungen verstellt werden. Hat der Fahrer seine optimale Schalthebelstellung gefunden, schwenkt er mit der Hand oder mit dem Fuß den Betätigungshebel (7) der Schnellarretierungsvorrichtung nach unten, so daß die Trägerplatte (4) bezüglich des Fahrerhausbodens und mithin die Nullstellung des Schaltgriffs (10) fixiert ist.

Alle in der Beschreibung erwähnten und/oder in der Zeichnung dargestellten neuen Merkmale allein oder in sinnvoller Kombination sind erfindungswesentlich, auch soweit sie in den Ansprüchen nicht ausdrücklich beansprucht sind.

## Patentansprüche

1. Schalthebelanordnung (1) für eine mechanische Betätigung eines Kraftfahrzeuggetriebes mit Schalthebel (2) und Schalthebellagerung (3) auf einer am oder im Bereich des Fahrzeug-/Fahrerhausbodens (5) zumindest längsverschieblichen Trägerplatte (4),
dadurch gekennzeichnet,
daß die Trägerplatte (4) bezüglich des Fahrzeug-/Fahrerhausbodens (5) durch eine Schnellklemmvorrichtung feststellbar ist, welche zumindest einen Klemmexzenter (6) und einen Klemmexzenter-Betätigungshebel (7) aufweist.

2. Schalthebelanordnung nach Anspruch 1,
dadurch gekennzeichnet,
daß der Betätigungshebel (7) zwischen einer im wesentlichen vertikalen Öffnungsstellung und einer im wesentlichen horizontalen Klemm-Schließstellung manuell verschwenkt werden kann.

3. Schalthebelanordnung nach Anspruch 2,
dadurch gekennzeichnet,
daß der Betätigungshebel (7) in der Klemm-Schließstellung insbesondere durch einen fahrzeugfesten Schwenkbügel gesichert werden kann.

4. Schalthebelanordnung nach einem der Ansprüche 1 bis 3,
dadurch gekennzeichnet,
daß die Trägerplatte (4) längs- und querverschieblich durch fahrzeugfeste Halteklammern am Fahrzeug-/Fahrerhausboden (5) befestigt ist.

5. Schalthebelanordnung nach einem der Ansprüche 1 bis 4,
dadurch gekennzeichnet,
daß an diagonal entgegengesetzten Enden der Trägerplatte (4) fahrzeugfeste Klemmexzenter (6) vorgesehen sind, die durch einen einzigen fahrzeugfesten Betätigungshebel (7) mit Zwischengestänge vom Fahrzeugführer manuell betätigbar sind.

6. Schalthebelanordnung nach einem der Ansprüche 1 bis 5,
dadurch gekennzeichnet,
daß die Trägerplatte (4) am oder im Bereich des Fahrzeug-/Fahrerhausbodens (5) zumindest in Längsrichtung geführt ist.

7. Schalthebelanordnung nach einem der Ansprüche 1 bis 6,
dadurch gekennzeichnet,
daß die Trägerplatte (4) am oder im Bereich des Fahrzeug-/Fahrerhausbodens (5) stufenlos längs- und/oder querverschieblich ist.

8. Schalthebelanordnung nach einem der Ansprüche 1 bis 7,
dadurch gekennzeichnet,
daß die Schalthebellagerung (3) ein Gelenklager (8) umfaßt, und daß der einteilig ausgebildete Schalthebel (2) am unteren Ende an einer Schaltstange (9) des Kraftfahrzeuggetriebes angelenkt ist.
